(19) Europäisches Patentamt
European Patent Office
Office européen des brevets

(11) EP 1 642 930 B1

(12) **EUROPEAN PATENT SPECIFICATION**

(45) Date of publication and mention of the grant of the patent:
**04.08.2010 Bulletin 2010/31**

(21) Application number: **04746305.4**

(22) Date of filing: **17.06.2004**

(51) Int Cl.:
***C08L 23/08*** *(2006.01)* ***C08L 53/02*** *(2006.01)*
***B32B 5/18*** *(2006.01)* ***C08J 9/00*** *(2006.01)*
***A43B 13/04*** *(2006.01)*

(86) International application number:
**PCT/JP2004/008836**

(87) International publication number:
**WO 2005/000958 (06.01.2005 Gazette 2005/01)**

(54) **RESIN COMPOSITION FOR FOAM AND USE THEREOF**

HARZZUSAMMENSETZUNG FÜR SCHAUMSTOFF UND VERWENDUNG DAVON

COMPOSITION DE RESINE POUR MOUSSE ET UTILISATION

(84) Designated Contracting States:
**DE FR GB IT**

(30) Priority: **27.06.2003 JP 2003185031**

(43) Date of publication of application:
**05.04.2006 Bulletin 2006/14**

(73) Proprietor: **Mitsui Chemicals, Inc.**
**Tokyo 105-7117 (JP)**

(72) Inventors:
- **SHIBA, Eiji,**
**c/o Mitsui Chemicals, Inc.**
**Ichihara-shi, Chiba 299-0108 (JP)**
- **KAWACHI, Hideshi,**
**c/o Mitsui Chemicals, Inc.**
**Ichihara-shi, Chiba 299-0108 (JP)**
- **YAMAGUCHI, Masahiro,**
**c/o Mitsui Chemicals, Inc.**
**Ichihara-shi, Chiba 299-0108 (JP)**

(74) Representative: **Simons, Amanda Louise**
**J.A. Kemp & Co.**
**14 South Square**
**Gray's Inn**
**London WC1R 5JJ (GB)**

(56) References cited:
**EP-A- 1 312 640** **EP-A- 1 319 686**
**EP-A1- 1 229 076** **WO-A-95/33006**
**JP-A- 59 155 479** **JP-A- 2002 034 601**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 642 930 B1

## Description

### FIELD OF THE INVENTION

The present invention relates to a composition for a foamed product and use thereof, and more particularly, to a composition capable of providing a foamed product (non-crosslinked or crosslinked foamed product) having low specific gravity and low compression set (CS), excelling in the tensile strength properties and the tear strength properties, as well as in impact resilience, and exhibiting a less decrease in elastic modulus at high temperatures, and a foamed product therefrom.

### BACKGROUND OF THE INVENTION

Techniques using crosslinked foamed products to obtain resins having low specific gravity, that is, light weight, high flexibility and high mechanical strength, are broadly applied to interior and exterior materials for construction, automotive parts such as interior materials or door glass run channels, packaging materials, daily necessities, and the like. Such techniques are in use because mere foaming of a resin for weight reduction leads to a decrease in the mechanical strength, whereas it is possible to achieve weight reduction by foaming while inhibiting lowering of the mechanical strength, by bonding molecular chains of the resin through a crosslinking reaction.

Furthermore, the crosslinked foamed products of resins are also used for footwears or footwear parts, such as soles (mainly, midsoles) of sports shoes or the like. The reason is that a material which is lightweight and has a mechanical strength and impact resilience high enough to inhibit deformation caused by long-term use and to withstand severe use conditions is desired.

Conventionally, it is widely known to use crosslinked foamed products of ethylene/vinyl acetate copolymers for shoe soles. However, the crosslinked foamed products that are molded from an ethylene/vinyl acetate copolymer composition, have high specific gravity and high compression set, and therefore, when used for shoe soles for example, a problem arises that the soles are heavy and are compressed upon long-term use, so that mechanical strength such as impact resilience is lost.

National Publication of International Patent No. 501447/1997 and Japanese Patent Laid-Open Publication No. 206406/1999 describe a crosslinked foamed product employing an ethylene/α-olefin copolymer, and a crosslinked foamed product employing a mixture of an ethylene/vinyl acetate copolymer and an ethylene/α-olefin copolymer, respectively. These inventions show some improvements in terms of low specific gravity and low compression set, but they still do not offer satisfactory performance.

Further, Japanese Patent Laid-Open Publication No. 344924/2000 filed by the present inventors describes a foamed product (non-crosslinked or crosslinked foamed product) having an Asker C hardness in the range of 20 to 80, which has low specific gravity and low compression set (CS), and excels in tensile strength and tear strength properties as well as in impact resilience. However, when the foamed product is used at high temperatures, a problem arises that the hardness decreases so much that the touch is altered.

Meanwhile, WO 95/33006 and Japanese Patent Laid-Open Publication No. 231817/1996 disclose resin compositions containing an ethylene/α-olefin copolymer and a styrene block copolymer, but these publications have no description on an ethylene/polar monomer copolymer or crosslinked foamed product.

Furthermore, WO 02/14423 discloses a crosslinked foamed product obtained from a thermoplastic elastomer containing an ethylene/α-olefin copolymer and a styrene block copolymer, but the invention results only in a foamed product with low expansion rate and high specific gravity. Also, there is no description on ethylene/polar monomer copolymer.

The present inventors have extensive studied in order to suppress the above-described decrease in hardness at high temperatures, and found that a foamed product having a less decrease in hardness at high temperatures by employing a resin composition containing an ethylene/α-olefin copolymer (A1), a styrene block copolymer (B) an ethylene/polar monomer copolymer (A2) and a blowing agent (C), thus accomplishing the present invention.

### DISCLOSURE OF THE INVENTION

It is an object of the present invention to provide a composition which can provide a foamed product (non-crosslinked or crosslinked foamed product) having low specific gravity and low compression set (CS), excelling in the tensile strength properties and the tear strength properties, as well as in impact resilience, and exhibiting a less decrease in hardness at high temperatures; a foamed product therefrom; and a laminate using the foamed product.

The resin composition for a foamed product according to the invention is characterized as follows.

(1) It comprises 5 to 95 parts by weight of an ethylene/α-olefin copolymer (A1), 5 to 95 parts by weight of a styrene

block copolymer (B), 5 to 1900 parts by weight of an ethylene/polar monomer copolymer (A2) based on 100 parts by weight of the total of components (A1) and (B), and a blowing agent (C).

(2) The ethylene/α-olefin copolymer (A1) has the following properties:

the ethylene/α-olefin copolymer comprises ethylene and an α-olefin having 3 to 20 carbon atoms; the density (ASTM D1505, 23°C) of the copolymer is in the range of 0.857 to 0.910 g/$cm^3$; the melt flow rate ($MFR_2$) at 190°C under a load of 2.16 kg (ASTM D1238, load 2.16 kg, 190°C) is in the range of 0.1 to 40 g/10 min; and the index of molecular weight distribution, Mw/Mn, as measured by GPC is in the range of 1.5 to 3.0;

(3) The ethylene/α-olefin copolymer (A1) has the following properties:

(i) the ratio of the melt flow rate ($MFR_{10}$) at 190°C under a load of 10 kg to the melt flow rate ($MFR_2$) at 190°C under a load of 2.16 kg, $MFR_{10}/MFR_2$, satisfies the following formula:

$$MFR_{10}/MFR_2 \geq 6.0$$

$Mw/Mn + 5.0 \leq MFR_{10}/MFR_2$,

(ii) the intensity ratio of Tαβ to Tαα (Tαβ/Tαα) in the $^{13}$C-NMR spectrum is 0.5 or less,

(iii) the B value determined from the $^{13}$C-NMR spectrum and the following General Formula (1) is 0.9 to 1.5:

$$B\ value = [POE]/(2\cdot[PE][PO]) \qquad (1)$$

wherein [PE] is the molar fraction of a structural unit derived from ethylene in the copolymer, [PO] is the molar fraction of a structural unit derived from α-olefin in the copolymer, and [POE] is the number ratio of ethylene-α-olefin chains to all dyad chains in the copolymer;

(4) The ethylene/α-olefin copolymer (A1) is an ethylene/1-butene copolymer;

(5) The styrene block copolymer (B) is a styrene/butadiene/styrene block copolymer, a styrene/isoprene/styrene block copolymer, or a hydrogenated polymer thereof; or

(6) The blowing agent (C) is selected from an organic thermally decomposable blowing agent, an inorganic thermally decomposable blowing agent, an organic physical blowing agent and an inorganic physical blowing agent.

The (crosslinked) foamed product according to the invention is:

(7) A foamed product obtainable by thermal treatment of the resin composition according to any one of (1) to (6) above;

(8) A foamed product obtainable by secondary compression of the foamed product according to (7) above; or

(9) A foamed product which is obtainable from a resin composition comprising 5 to 95 parts by weight of an ethylene/α-olefin copolymer (A1), 5 to 95 parts by weight of a styrene block copolymer (B), 5 to 1900 parts by weight of an ethylene/polar monomer copolymer (A2) based on 100 parts by weight of the total of components (A1) and (B), and a blowing agent (C), wherein said foamed product has a gel content of 70% or more and a specific gravity of 0.6 or less.

(10) A foamed product according to (9) which is a crosslinked foamed product.

(11) A laminate having a layer comprising the foamed product according to any one of (7) to (10) above and a layer comprising at least one material selected from the group consisting of polyolefins, polyurethanes, rubber, leather and artificial leather.

(12) A footwear comprising the foamed product according to any one of (7) to (10) above, or the laminate according to (11) above.

(13) A footwear part comprising the foamed product according to any one of (7) to (10) above, or the laminate according to (11) above; or

(14) The footwear part according to (13), which is a midsole, an innersole or a sole.

## PREFERRED EMBODIMENTS OF THE INVENTION

Hereinafter, the resin composition for a foamed product and use thereof according to the present invention will be described in detail.

The resin composition for a foamed product, preferably the resin composition for crosslinked foamed product,

according to the invention comprises an ethylene/α-olefin copolymer (A1), a styrene block copolymer (B) an ethylene/polar monomer copolymer (A2) and a blowing agent (C), and if necessary, further contains an organic peroxide (D) and a crosslinking assistant (E). In particular, it is generally preferable for the resin composition to contain an ethylene/α-olefin copolymer (A1), a styrene block copolymer (B), an ethylene/polar monomer copolymer (A2) and a blowing agent (C) as the essential components.

The foamed product according to the invention is obtainable by foaming or crosslink foaming the composition, but crosslinked foamed product is preferably used. The mode of this crosslinking method may be thermal crosslinking or ionizing radiation crosslinking. In the case of thermal crosslinking, it is necessary to add an organic peroxide (D) and a crosslinking assistant (E) to the composition. In the case of ionizing radiation crosslinking, a crosslinking assistant (E) may be optionally added.

Ethylene/α-olefin copolymer (A1)

The ethylene/α-olefin copolymer (A1) used in the invention is an amorphous or low-crystalline, random or block copolymer comprising ethylene and an α-olefin having 3 to 20 carbon atoms. It is preferably a flexible ethylene/α-olefin copolymer having a density (ASTM D1505) of not less than 0.857 g/cm$^3$ and not more than 0.910 g/cm$^3$, preferably 0.860 to 0.905 g/cm$^3$, and a melt flow rate (MFR: ASTM D1238, 190°C, load 2.16 kg) of 0.1 to 40 g/10 min, preferably 0.5 to 20 g/10 min.

The α-olefin copolymerized with ethylene is an α-olefin having 3 to 20 carbon atoms, and specific examples thereof include propylene, 1-butene, 1-pentene, 1-hexene, 1-heptene, 1-octene, 1-nonene, 1-decene, 1-undecene, 1-dodecene, 1-hexadecene, 1-octadecene, 1-nonadecene, 1-eicosene, 4-methyl-1-pentene and the like. Among these, α-olefins having 3 to 10 carbon atoms are preferable, and particularly, propylene, 1-butene, 1-hexene and 1-octene are preferred. These α-olefins are used individually or in combination of two or more kinds.

The ethylene/α-olefin copolymer (A1) preferably contains 75 to 95 mol% of a unit derived from ethylene and 5 to 25 mol% of a unit derived from an α-olefin having 3 to 20 carbon atoms. Here, the total amount of ethylene and the α-olefin is 100 mol%.

The ethylene/α-olefin copolymer (A1) may contain, in addition to these units, units derived from other polymerizable monomers within the scope not impairing the object of the invention.

Specific examples of the ethylene/α-olefin copolymer (A1) include an ethylene/propylene copolymer, an ethylene/1-butene copolymer, an ethylene/propylene/1-butene copolymer, an ethylene/propylene/ethylidene norbornene copolymer, an ethylene/1-hexene copolymer, an ethylene/1-octene copolymer, and the like. Among these, an ethylene/propylene copolymer, an ethylene/1-butene copolymer, an ethylene/1-hexene copolymer, an ethylene/1-octene copolymer and the like are preferably used, and an ethylene/1-butene copolymer is particularly preferably used. These copolymers may be random or block copolymers, but random copolymers are particularly preferred.

The ethylene/α-olefin copolymer (A1) has a degree of crystallinity measured by X-ray diffractometry, of usually 40% or less, and preferably 10 to 30% or less.

The ethylene/α-olefin copolymer (A1) preferably has a molecular weight distribution (Mw/Mn) determined by gel permeation chromatography (GPC), in the range of 1.5 to 3.0, and preferably in the range of 1.7 to 2.5. When an ethylene/α-olefin copolymer (A1) having a molecular weight distribution (Mw/Mn) within the above-described range is used, a composition which can produce a foamed product excelling in compression set and moldability is obtained. The ethylene/α-olefin copolymer (A1) as described above usually exhibits the properties of an elastomer.

With respect to the ethylene/α-olefin copolymer (A1), the ratio ($MFR_{10}$/ $MFR_2$) of the melt flow rate ($MFR_{10}$) measured at 190°C under a load of 10 kg to the melt flow rate ($MFR_2$) measured under a load of 2.16 kg according to ASTM D1238 satisfies the relationship of the following formula:

$$MFR_{10}/MFR_2 \geq 6.0,$$

and preferably

$$7 \leq MFR_{10}/MFR_2 \leq 15,$$

and the molecular weight distribution (Mw/Mn) and the ratio of melt flow rates satisfy the relationship of the following formula:

$$Mw/Mn + 5.0 < MFR_{10}/MFR_2,$$

then a composition which can produce a foamed product (non-crosslinked foamed product or crosslinked foamed product) having high expansion rate, i.e., low specific gravity and high elasticity, and excelling in compression set and moldability, can be obtained.

The ethylene/α-olefin copolymer (A1) of the invention preferably has an intensity ratio of Tαβ to Tαα (Tαβ/Tαα) in the $^{13}$C-NMR spectrum, of 0.5 or less, and more preferably 0.4 or less.

Here, Tαα and Tαβ in the $^{13}$C-NMR spectrum are peak intensities for $CH_2$ in the structural unit derived from the α-olefin having 3 or more carbon atoms, and as shown below, they indicate two different types of $CH_2$ having different positions to the tertiary carbon.

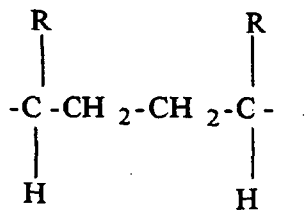

Tαβ

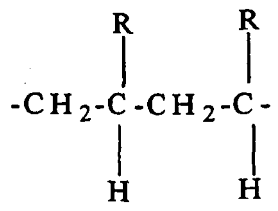

Tαα

Such intensity ratio Tαβ/Tαα, can be determined as follows. The $^{13}$C-NMR spectrum of the ethylene/α-olefin copolymer [A1] is measured, for example, using a JEOL-GX270 NMR apparatus manufactured by JEOL, Ltd. The measurement is carried out using a mixed solution of the sample in hexachlorobutadiene/$d_6$-benzene = 2/1 (volume ratio) at a concentration of 5% by weight, at 67.8 MHz and 25°C with $d_6$-benzene (128 ppm) as the standard. The measured $^{13}$C-NMR spectrum is analyzed according to the proposals of Lindemann-Adams (Analysis Chemistry, 43, p1245 (1971)) and J.C. Randall (Review Macromolecular Chemistry Physics, C29, 201 (1989)), to determine the intensity ratio Tαβ/Tαα.

For the ethylene/α-olefin copolymer (A1) of the invention, the B value determined by the $^{13}$C-NMR spectrum and the following General Formula (1) is preferably 0.9 to. 1.5, and more preferably 0.95 to 1.2.

$$\text{B value} = [POE]/(2 \cdot [PE][PO]) \qquad (1)$$

wherein [PE] is the molar fraction of a structural unit derived from ethylene in the copolymer, [PO] is the molar fraction of a structural unit derived from α-olefin in the copolymer, and [POE] is the number ratio of ethylene-α-olefin chains to all dyad chains in the copolymer. This B value is an index indicating the distribution status of ethylene and the α-olefin having 3 to 20 carbon atoms in the ethylene/α-olefin copolymer and can be determined based on the reports of J.C. Randall (Macromolecules, 15, 353 (1982)), J. Ray (Macromolecules, 10, 773 (1977)), or the like.

The B value of the ethylene/α-olefin copolymer (A1) is usually determined by measuring the $^{13}$C-NMR spectrum of a sample prepared by uniformly dissolving about 200 mg of the ethylene/α-olefin copolymer in 1 ml of hexachlorobutadiene in a 10 mmϕ sample tube, at a temperature of 120°C, a frequency of 25.05 MHz, a spectral range of 1500 Hz, a pulse repetition time of 4.2 sec, and a pulse interval of 6 μsec.

As the B value is larger, the block-like chains of the ethylene or α-olefin become shorter, thus having a uniform distribution of ethylene and α-olefin, and a narrow composition distribution of the copolymer rubber is observed. In addition, when the B value is less than 1.0, the composition distribution of the ethylene/α-olefin copolymer becomes broader, and thus leading disadvantages such as deteriorated handling properties of the copolymer.

The ethylene/α-olefin copolymer (A1) as described above can be prepared by a conventionally known method of using a vanadium catalyst, a titanium catalyst, a metallocene catalyst or the like. In particular, the solution polymerization method described in Japanese Patent Laid-Open Publication No. 121709/1987 or the like is preferred.

Ethylene/Polar Monomer Copolymer (A2)

The polar monomer of the ethylene/polar monomer copolymer (A2) used in the invention may be exemplified

by unsaturated carboxylic acid, salts thereof, esters thereof, amides thereof, vinyl esters, carbon monoxide or the like. More specifically, mention may be made of one or two or more compounds selected from unsaturated carboxylic acids such as acrylic acid, methacrylic acid, fumaric acid, itaconic acid, monomethyl maleate, monoethyl maleate, maleic anhydride and itaconic anhydride; monovalent metal salts of these unsaturated carboxylic acids such as lithium, sodium and potassium salts, or polyvalent metal salts of these unsaturated carboxylic acids such as magnesium, calcium and zinc salts; unsaturated carboxylic acid esters such as methyl acrylate, ethyl acrylate, isopropyl acrylate, isobutyl acrylate, n-butyl acrylate, isooctyl acrylate, methyl methacrylate, ethyl methacrylate, isobutyl methacrylate and dimethyl maleate; vinyl esters such as vinyl acetate and vinyl propionate; carbon monoxide, sulfur dioxide, and the like.

More specifically, representative examples of the ethylene/polar monomer copolymer (A2) include ethylene/unsaturated carboxylic acid copolymers such as an ethylene/acrylic acid copolymer and an ethylene/methacrylic acid copolymer, and ionomers in which part or all of the carboxyl groups of the above-described ethylene/unsaturated carboxylic acid copolymer are neutralized with the above-described metals; ethylene/unsaturated carboxylic acid ester copolymers such as an ethylene/methyl acrylate copolymer, an ethylene/ethyl acrylate copolymer, an ethylene/methyl methacrylate copolymer, an ethylene/isobutyl acrylate copolymer and ethylene/n-butyl acrylate; ethylene/unsaturated carboxylic acid ester/unsaturated carboxylic acid copolymers such as an ethylene/isobutyl acrylate/methacrylic acid copolymer and an ethylene/n-butyl acrylate/methacrylic acid copolymer, and ionomers in which part or all of the carboxyl groups of the above-described copolymers are neutralized with the above-described metals; ethylene/vinyl ester copolymers such as an ethylene/vinyl acetate copolymer; and the like.

Among these, a copolymer of ethylene with a polar monomer selected from unsaturated carboxylic acids, salts thereof, esters thereof and vinyl acetate is particularly preferred, and especially, an ethylene/(meth)acrylic acid copolymer or ionomers thereof, or an ethylene/(meth)acrylic acid/(meth)acrylic acid ester copolymer or ionomers thereof, and an ethylene/vinyl acetate copolymer are preferred, with the ethylene/vinyl acetate copolymer being most preferred.

The ethylene/polar monomer copolymer (A2) may vary depending on the kind of the polar monomer, and the content of the polar monomer is preferably 1 to 50% by weight, and particularly preferably 5 to 45% by weight. From the viewpoint of mold processability, mechanical strength and the like, it is preferable to use an ethylene/polar monomer copolymer whose melt flow rate as measured at 190°C and under a load of 2160 g is 0.05 to 500 g/10 min, in particular 0.1 to 100 g/10 min. The copolymers of ethylene with unsaturated carboxylic acids, unsaturated carboxylic acid esters, vinyl esters or the like can be prepared by radical copolymerization under high temperature and high pressure conditions. The copolymers (ionomers) of ethylene with metal salts of unsaturated carboxylic acids can be prepared by reacting ethylene/unsaturated carboxylic acid copolymers with corresponding metal compounds.

When the ethylene/polar monomer copolymer (A2) used in the invention is an ethylene/vinyl acetate copolymer, the content of vinyl acetate in the ethylene/vinyl acetate copolymer is 10 to 30% by weight, preferably 15 to 30% by weight, and more preferably 15 to 25% by weight.

Further, this ethylene/vinyl acetate copolymer has a melt flow rate (MFR; ASTM D1238, 190°C, load 2.16 kg) of 0.1 to 50 g/10 min, preferably 0.5 to 20 g/10 min, and more preferably 0.5 to 5 g/10 min.

The ethylene/polar monomer copolymer (A2) is used in a proportion of 5 to 1900 parts by weight, and preferably 5 to 100 parts by weight, based on 100 parts by weight of the total of ethylene/α-olefin copolymer (A1) and styrene block copolymer (B). When the ethylene/polar monomer copolymer (A2) is a copolymer of ethylene with an unsaturated carboxylic acid, use of the copolymer in the above-described proportion may lead to an elastomer composition which can provide a crosslinked foamed product excelling in the tear strength properties and in adhesive properties to other layers made of polyurethane, rubber, leather or the like. Furthermore, when the ethylene/polar monomer copolymer (A2) is used in the above-described proportion, the resulting layer of the foamed product has excellent adhesive properties to other layers made of polyurethane, rubber, leather or the like, and it is preferable to use the layer of the foamed product as a laminate.

Styrene Block Copolymer (B)

The styrene block copolymer of the invention consists of at least two polymer blocks comprising a vinyl aromatic compound as the main component (a) and at least one polymer block comprising a conjugated diene compound as the main component (b). Examples of the vinyl aromatic compound constituting the polymer block (a) include styrene, α-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene and the like. The polymer block (a) may consist of only one of the above-described vinyl aromatic compounds, or of two or more kinds of the compounds. According to the invention, styrene and/or α-methylstyrene among them are preferably used.

Examples of the conjugated diene compound constituting the polymer block (b) include 1,3-butadiene, isoprene, 1,3-pentadiene, 2,3-dimethyl-1,3-butadiene, 2-methyl-1,3-pentadiene, 1,3-hexadiene, phenylbutadiene, 4,5-diethyl-1,3-octadiene, 3-butyl-1,3-octadiene and the like. The polymer block (b) may consist of only one of the conjugated diene compounds, or of two or more kinds of the compounds. According to the invention, 1,3-butadiene and/or isoprene are

preferably used from the viewpoint of improvements in the rubber properties.

The proportion of the polymer block (a) comprising a vinyl aromatic compound in the styrene block copolymer (B) is in the range of 5 to 75% by mass, more preferably 10 to 65% by mass, and particularly preferably 10 to 40% by mass. When the proportion exceeds 75% by mass, flexibility of the copolymer is impaired, and thus the copolymer becomes brittle. On the other hand, when the proportion is less than 5% by mass, mechanical strength of the thermoplastic elastomer composition is lowered, and thus it is not practical.

The microstructure of the conjugated diene unit in the polymer block (b) of the styrene block copolymer (B) is not particularly limited. When butadiene is used alone as the conjugated diene compound constituting the polymer block (b), the content of the 1,2-bond is preferably 20 to 50 mol%, and more preferably 35 to 45 mol%, because within this range, the elastomeric properties can be sufficiently maintained even after the double bonds are saturated due to hydrogenation of the copolymer. Moreover, when isoprene is used alone as the conjugated diene compound constituting the polymer block (b), or when isoprene and butadiene are used in mixture, the total content of the 1,2-bond and 3,4-bond is preferably 0 to 80 mol%, and particularly preferably 5 to 70 mol%. The copolymer before hydrogenation may be linear, branched or star-shaped. Also, the configuration of the copolymer may be one of the above-described shapes or a mixture of one or more shapes.

Preferred bonding mode of the polymer block (a) of vinyl aromatic compound and the polymer block (b) of conjugated diene compound is a triblock copolymer of a-b-a type, etc., and a multiblock copolymer represented by $(a\text{-}b)_n$, $(a\text{-}b)_n\text{-}a$ or $(a\text{-}b)_nX$ (wherein n is an integer of 2 or greater, and X is a coupling residue).

The number average molecular weight of the styrene block copolymer (B) of the invention is not particularly limited, but it is in the range of 40,000 to 500,000, more preferably 40,000 to 400,000, and particularly preferably 40,000 to 200,000. Moreover, the number average molecular weight as used in the present specification is the molecular weight determined by gel permeation chromatography (GPC) in terms of polystyrene. The number average molecular weight of the styrene block copolymer (B) of the invention can be appropriately selected in accordance with the desired applications of the invention.

The process for producing the styrene block copolymer (B) used in the invention is not particularly limited, and for example, the copolymer can be produced by a conventional anionic polymerization method as follows. That is, a block copolymer is formed by sequentially polymerizing or coupling a vinyl aromatic compound and a conjugated diene compound using an alkyllithium compound as an initiator, in an organic solvent that is inert to the polymerization reactions such as n-hexane or cyclohexane. Subsequently, the resulting block copolymer is hydrogenated by a known method in an inert organic solvent, in the presence of a hydrogenation catalyst, and thus a preferred styrene block copolymer (B) of the invention in which double bonds of the polymer main chain are hydrogenated and saturated can be produced.

The styrene block copolymer (B) that can be used in the invention may be commercially available, and examples of the block copolymer of a vinyl aromatic compound and a conjugated diene compound include "Kraton" (tradename) of Kraton Polymers Research B.V., "Tuftec" and "Tufprene" (tradenames) of Asahi Kasei Corp., and "Septon" and "Hybrar" series (tradenames) of Kuraray Co., Ltd.

Blowing Agent (C)

The blowing agent (C) used in the invention may be a chemical blowing agent, and specific examples include organic thermally decomposable blowing agents including azo compounds such as azodicarbonamide (ADCA), 1,1'-azobis(1-acetoxy-1-phenylethane), dimethyl-2,2'-azobisbutyrate, dimethyl-2,2'-azobisisobutyrate, 2,2'-azobis(2,4,4-trimethylpentane), 1,1'-azobis(cyclohexane-1-carbonitrile) and 2,2'-azobis[N-(2-carboxyethyl)-2-methyl-propionamidine]; nitroso compounds such as N,N'-dinitrosopentamethylenetetramine (DPT); hydrazine derivatives such as 4,4'-oxybis (benzenesulfonyl hydrazide) and diphenylsulfone-3,3'-disulfonyl hydrazide; and semicarbazide compounds such as p-toluenesulfonyl semicarbazide; and trihydrazinotriazine; and also inorganic thermally decomposable blowing agents including bicarbonates such as sodium hydrogen carbonate and ammonium hydrogen carbonate; carbonates such as sodium carbonate and ammonium carbonate; nitrites such as ammonium nitrite; and hydrides. Among these, azodicarbonamide (ADCA) and sodium hydrogen carbonate are particularly preferred.

According to the invention, a physical blowing agent (a blowing agent that is not necessarily accompanied by a chemical reaction upon foaming) also can be used as the blowing agent (C), and examples thereof include organic physical blowing agents including methanol, ethanol, various aliphatic hydrocarbons such as propane, butane, pentane and hexane; various chlorinated hydrocarbons such as dichloroethane, dichloromethane and carbon tetrachloride; and various fluorochlorohydrocarbons such as flon; and also, inorganic physical blowing agents such as air, carbon dioxide, nitrogen, argon and water. Among these, carbon dioxide, nitrogen and argon are the most preferable because they do not need to be vaporized, are inexpensive and hardly cause environmental pollution and ignition.

The physical blowing agents that are used as the blowing agent (C) of the invention do not leave any decomposition residues of the blowing agent and thus can prevent mold contamination during the crosslinking foaming process of the composition. Moreover, since the physical blowing agents are not powdery, they have good kneadability. When

such physical blowing agents are used, bad odors of the resulting crosslinked foamed product (for example, ammonia odor generated upon decomposition of ADCA) can be prevented.

According to the invention, the above-described chemical blowing agents can be used in combination, to an extent that the blowing agents do not have adverse effects such as bad odor and mold contamination.

For the storing method of the physical blowing agent, in small scale production, carbon dioxide, nitrogen or the like may be used as being contained in a bomb and supplied to an injection molding machine or an extrusion molding machine through pressure reducing valves, or may be pressurized by a pump and supplied to an injection molding machine or an extrusion molding machine.

For a facility producing foamed products in large scales, liquid carbon dioxide, liquid nitrogen or the like may be stored in a storage tank, vaporized as passing through a heat exchanger and supplied to an injection molding machine or an extrusion molding machine through piping and pressure reducing valves.

In the case of a liquid physical blowing agent, the storage pressure is preferably in the range of 0.13 to 100 MPa. When the pressure is too low, the blowing agent cannot be supplied to an injection molding machine or an extrusion molding machine by reducing the pressure. When the pressure is too high, it is necessary to increase the pressure resistance of the storage facility, and thus the facility needs to be large and complicated, which is not desirable. The storage pressure as defined herein means the pressure supplied to a pressure reducing valve after vaporization.

When a chemical blowing agent is used as the blowing agent (C), the chemical blowing agent is usually used in a proportion of 3 to 20 parts by weight, preferably 5 to 15 parts by weight, based on 100 parts by weight of the total amount of the ethylene/$\alpha$-olefin copolymer (A1) and the styrene block copolymer (B). However, since the amount of gas generated may differ depending on the kind and grade of the blowing agent used, the amount of the chemical blowing agent may be appropriately increased or decreased in accordance with the desired foaming ratio.

When a physical blowing agent is used as the blowing agent (C), the amount of the physical blowing agent added is appropriately determined in accordance with the desired foaming ratio.

According to the invention, a blowing assistant may be used, if necessary, together with the blowing agent (C).

The blowing assistant has functions of lowering the decomposition temperature of the blowing agent (C), accelerating the decomposition, making air bubbles uniform, and the like. Examples of such blowing assistant include zinc oxide (ZnO), zinc stearate, organic acids such as salicylic acid, phthalic acid, stearic acid and oxalic acid, urea or derivatives thereof, and the like.

Organic peroxide (D)

The organic peroxide (D) that is used, if necessary, as a crosslinking agent in the invention may be specifically exemplified by dicumyl peroxide, di-t-butyl peroxide, 2,5-dimethyl-2,5-di-(t-butylperoxy)hexane, 2,5-dimethyl-2,5-di-(t-butylperoxy)hexyne-3, 1,3-bis(t-butylperoxyisopropyl)benzene, 1,1-bis(t-butylperoxy)-3,3,5-trimethylcyclohexane, n-butyl-4,4-bis(t-butylperoxy)valerate, benzoyl peroxide, p-chlorobenzoyl peroxide, 2,4-dichlorobenzoyl peroxide, t-butyl peroxybenzoate, t-butyl perbenzoate, t-butylperoxyisopropyl carbonate, diacetyl peroxide, lauroyl peroxide, t-butylcumyl peroxide and the like.

According to the invention, an organic peroxide (D) is usually used in a proportion of 0.1 to 1.5 parts by weight, preferably 0.2 to 1.0 part by weight, based on 100 parts by weight of the total amount of the ethylene/$\alpha$-olefin copolymer (A1) and styrene block copolymer (B). When the organic peroxide (D) is used in the above-described proportion, a crosslinked foamed product having an appropriate crosslinked structure can be obtained. Further, when the organic peroxide (D) is used together with a crosslinking assistant (E) in the above-described proportion, a crosslinked foamed product having a more suitable crosslinked structure can be obtained.

Crosslinking assistant (E)

The crosslinking assistant (E) that is used preferably, if necessary, in the invention may be specifically exemplified by a peroxy crosslinking assistant such as sulfur, p-quinonedioxime, p,p'-dibenzoylquinonedioxime, N-methyl-N-4-dinitrosoaniline, nitrosobenzene, diphenylguanidine or trimethylolpropane-N,N'-m-phenylenedimaleimide; divinylbenzene, triallyl cyanurate (TAC) or triallyl isocyanurate (TAIC). Mention may also be made of polyfunctional methacrylate monomers such as ethylene glycol dimethacrylate, diethylene glycol dimethacrylate, polyethylene glycol dimethacrylate, trimethylolpropane trimethacrylate and allyl methacrylate; and polyfunctional vinyl monomers such as vinyl butyrate and vinyl stearate. Among these, triallyl cyanurate (TAC) and triallyl isocyanurate (TAIC) are preferred.

According to the invention, the crosslinking assistant (E) is preferably used in an amount such that the weight ratio of the crosslinking assistant (E) to the organic peroxide (D), [(E)/(D)], is 1/30 to 5/1, preferably 1/20 to 3/1, and more preferably 1/15 to 2/1.

Resin composition

The resin composition according to the invention contains 5 to 95 parts by weight of an ethylene/α-olefin copolymer (A1), 5 to 95 parts by weight of a styrene block copolymer (B), and based on 100 parts by weight of the total of components (A1) and (B), 5 to 1900 parts by weight of an ethylene/polar monomer copolymer (A2), and further a blowing agent (C); preferably, 40 to 95 parts by weight of the ethylene/α-olefin copolymer (A1), 5 to 60 parts by weight of the styrene block copolymer (B), and based on 100 parts by weight of the total of components (A1) and (B), 5 to 1900 parts by weight of the ethylene/polar monomer copolymer (A2), and further a blowing agent (C); and more preferably, 70 to 95 parts by weight of the ethylene/α-olefin copolymer (A1), 5 to 30 parts by weight of the styrene block copolymer (B), and based on 100 parts by weight of the total of components (A1) and (B), 5 to 100 parts by weight of the ethylene/polar monomer copolymer (A2), and further a blowing agent (C).

Preparation of resin composition

The resin composition according to the invention is a non-crosslinked and unfoamed composition, and may be in a molten state, or a pellet or sheet that has been cooled to solidify.

The pellet of the resin composition according to the invention can be prepared by, for example, mixing an ethylene/α-olefin copolymer (A1), a styrene block copolymer (B), an ethylene/polar monomer copolymer (A2), a blowing agent (C) and if necessary, an organic peroxide (D), a crosslinking assistant (E) and a blowing assistant, at the above-described proportions with a Henschel mixer or the like, plastifying by melting at a temperature at which the blowing agent (C) and/or the organic peroxide (D) is not decomposed by a kneading machine such as a Banbury mixer, a roll or an extruder, then uniformly mixing and dispersing the mixture and pelletizing.

In addition to the above components, the composition can contain various additives, if necessary, such as a filler, a heat stabilizer, a weathering stabilizer, a flame retardant, a hydrochloric acid absorbent and a pigment, within the limits not impairing the object of the invention.

The sheet of the composition according to the invention can be produced by, for example, subjecting the pellet of the composition obtained as described above to an extruder or a calender molding machine. Alternatively, a non-crosslinked and unfoamed, expandable sheet can be produced by a method of kneading all components of the composition with a Brabender mixer or the like and then molding the kneaded product into a sheet by a calendar roll, a method of molding into a sheet with a press molding machine, or a method of kneading the composition using an extruder and then making into a sheet through a T-die or a circular die, or the like.

Foamed Product

The foamed product according to the invention can be obtained by foaming or crosslink foaming the resin composition of the invention as described above, under the conditions of usually a temperature of 130 to 200°C, a pressure of 30 to 300 kgf/cm$^2$ and a period of 10 to 90 minutes. However, the time of (crosslinking) foaming can be appropriately increased or decreased beyond the described range because the time is dependent on the thickness of the mold.

The foamed product or crosslinked foamed product according to the invention may be a foamed product that is obtained by compression molding the molded product that has been foamed or crosslinked foamed under the above-described conditions, at 130 to 200°C and at 30 to 300 kgf/cm$^2$ for 5 to 60 minutes, at a compression ratio of 1.1 to 3, preferably 1.3 to 2.

Such a foamed product or crosslinked foamed product has a specific gravity (JIS K7222) of 0.6 or less, preferably 0.03 to 0.25, and more preferably 0.05 to 0.25, and a surface hardness (Asker C hardness) in the range of 20 to 80, preferably 30 to 65. The crosslinked foamed product preferably has a gel fraction of 70% or more, and usually of 70 to 95%.

The foamed product, especially the crosslinked foamed product, according to the invention having such properties exhibits low compression set, high tear strength and high impact resilience.

Moreover, the gel fraction (gel content: xylene-insoluble fraction) used herein is measured as follows.

Samples of the crosslinked foamed product were weighed and cut finely, and then the obtained fine pieces were placed together with p-xylene in a closed container. Then, p-xylene was refluxed at ambient pressure for 3 hours.

Next, the sample was placed on a filter paper and subjected to absolute drying. The value obtained by subtracting the weight of the xylene-insoluble components (for example, a filler, a bulking agent, a pigment, etc.) other than the polymer components from the weight of the dried residue was defined as "corrected final weight (Y)".

On the other hand, the value obtained by subtracting the weight of the xylene-soluble components (for example, a stabilizer, etc.) other than the polymer components and the weight of the xylene-insoluble components (for example, a filler, a bulking agent, a pigment, etc.) other than the polymer components from the weight of the sample was defined as "corrected initial weight (X)".

Here, the gel content (xylene-insoluble fraction) is determined by the following formula:

$$\text{Gel content [wt\%]} = ([\text{corrected final weight (Y)}] \div [\text{corrected initial weight (X)}]) \times 100$$

Preparation of Foamed Product

The foamed product (non-crosslinked or crosslinked foamed product) according to the invention can be produced by, for example, the following method.

The sheet of the composition according to the invention can be obtained by, for example, subjecting the mixture as described in the section under the title "Preparation of composition" to a calender molding machine, a press molding machine or a T-die extruder. The sheet molding process should be necessarily carried out at a temperature below the decomposition temperatures of the blowing agent (C) and the organic peroxide (D), and specifically, the sheet molding process should be necessarily carried out under the condition that the temperature of the composition in a molten state is set at 100 to 130°C.

The composition formed into a sheet by the above-described method is cut into a volume of 1.0 to 1.2 times the volume of a mold, and placed in the mold maintained at 130 to 200°C. A primary foamed product (non-crosslinked or crosslinked foamed product) is produced at a mold clamping pressure of 30 to 300 kgf/cm$^2$ for a holding time of 10 to 90 minutes. However, the (crosslinking) time can be appropriately increased or decreased beyond the described range because the time is dependent on the thickness of the mold.

The mold for (crosslinked) foamed product is not particularly limited in shape, but usually a mold having a shape suitable for producing sheets is used. This mold should necessarily have a completely closed structure so that the molten resin and the gas generated during the decomposition of the blowing agent do not escape. Further, the mold form preferably has a taper on the inner walls in the viewpoint of releasability of the resin.

The primary foamed product obtained by the above-described method is imparted with a predetermined shape by compression molding. The conditions for this compression molding are such that the mold temperature is in the range of 130 to 200°C, the clamping pressure is in the range of 30 to 300 kgf/cm$^2$, the compression time is in the range of 5 to 60 minutes and the compression ratio is in the range of 1.1 to 3.0.

In order to obtain a crosslinked foamed product by means of a crosslinking method due to irradiation with ionizing radiation, first, an ethylene/α-olefin copolymer (A1), a styrene block copolymer (B), and an organic thermally decomposable blowing agent as the blowing agent (C) together with other additives are melt kneaded at a temperature below the decomposition temperature of the organic thermally decomposable blowing agent, and then the resulting kneaded product is molded into a sheet shape for example, so as to obtain an expandable sheet.

Next, the resulting expandable sheet is irradiated with a predetermined dose of ionizing radiation to crosslink the ethylene/α-olefin copolymer (A1) and the styrene block copolymer (B), and if necessary, the ethylene/polar monomer copolymer (A2). Then, the resulting expandable crosslinked sheet is foamed by heating to a temperature over the decomposition temperature of the organic thermally decomposable blowing agent, to obtain a crosslinked foamed sheet.

The ionizing radiation used may be an α-ray, β-ray, γ-ray, electron beam, neutron beam, X-ray or the like. Among these, the γ-ray of cobalt-60 and the electron beam are preferably used.

The foamed products include, for example, sheet, thick board, net and shaped articles.

From the crosslinked foamed product obtained as above, a secondary crosslinked foamed product having the above-described properties can be prepared in the same manner that for producing the secondary foamed product mentioned above.

Laminate

The laminate according to the invention is a laminate having a layer comprising the foamed product (non-crosslinked or crosslinked foamed product) of the invention, and a layer comprising at least one material selected from the group consisting of polyolefin, polyurethane, rubber, leather and artificial leather.

The types of the polyolefin, polyurethane, rubber, leather and artificial leather are not particularly limited, and conventionally known polyolefins, polyurethanes, rubbers, leathers and artificial leathers can be used. Such laminate is particularly suitable for the applications in footwears and footwear parts.

Footwear and Footwear Parts

The footwear and footwear parts according to the invention comprise the foamed product (non-crosslinked or crosslinked foamed product) or a laminate according to the invention. Examples of the footwear part include shoe soles, midsoles, innersoles, soles, sandals and the like.

## EXAMPLES

Hereinafter, the invention will be explained in more detail with reference to Examples, but it should be construed that the invention is in no way limited to those examples.

In addition, the density, MFR, B value, Tαβ intensity ratio, and molecular weight distribution (Mw/Mn) of the ethylene/1-butene copolymer used in the Examples and Comparative Examples, and the specific gravity, compression set, tear strength, Asker C hardness (surface hardness) and impact resilience of the crosslinked foamed product obtained in the Examples and Comparative Examples were measured by the following methods.

Evaluation of the properties of ethylene/1-butene copolymer

(1) Density

The density was determined at 23°C according to ASTM D1505.

(2) MFR

The MFR was determined at 190°C according to ASTM D1238. The measurement value obtained under a load of 2.16 kg was defined as $MFR_2$, and the measured value obtained under a load of 10 kg was defined as $MFR_{10}$.

(3) B value and Tαβ intensity ratio

These values were determined by $^{13}$C-NMR.

(4) Molecular weight distribution (Mw/Mn)

The molecular weight distribution was determined by gel permeation chromatography at 140°C with o-dichlorobenzene as the solvent.

Evaluation of the properties of crosslinked foamed product

(1) Specific gravity

The specific gravity was measured according to JIS K7222.

(2) Compression set

The compression set (CS) was determined by carrying out a test for compression set according to JIS K6301 at 50°C for 6 hours at a compression of 50%.

(3) Tear strength

The tear strength was determined by carrying out a test for tear strength according to BS5131-2.6 under the conditions of a tensile rate of 10 mm/min.

(4) Asker C hardness

The Asker C hardness was determined at 23°C and 50°C according to the "Spring hardness test C test method" described in JIS K7312-1996 Appendix 2.

(5) Impact resilience

The impact resilience was measured according to JIS K6255.

(6) Adhesive strength of laminate

<Treatment of secondary crosslinked foamed product>

First, the surface of a secondary crosslinked foamed product was washed with water containing surfactants and dried at room temperature for 1 hour.

Then, the secondary crosslinked foamed product was immersed in methylcyclohexane for 3 minutes and dried in an oven of 60°C for 3 minutes.

Subsequently, a UV-curable primer [GE258H1 available from Great Eastern Resins Co., Ltd.] was thinly coated thereon with a brush, and the coated foamed product was dried in an oven of 60°C for 3 minutes. Thereafter, the coated foamed product was irradiated with UV light using an irradiation apparatus having three high pressure mercury lamps of 80 W/cm installed perpendicular to a passing direction [EPSH-600-3S type manufactured by Japan Storage Battery Co., Ltd., UV irradiation apparatus], at a position 15 cm under the light source, while moving the foamed product at a conveyor speed of 10 m/min.

Then, an auxiliary primer [Primer GE6001L of Great Eastern Resins Co., Ltd. mixed with 5% by weight of a curing agent GE366S] was thinly coated thereon with a brush and dried in an oven of 60°C for 3 minutes.

Subsequently, an adhesive [Adhesive 98H of Great Eastern Resins Co., Ltd. mixed with 4% by weight of a curing agent GE348] was thinly coated thereon with a brush and dried in an oven of 60°C for 5 minutes.

Finally, the secondary crosslinked foamed product coated with the above-mentioned adhesive and a polyurethane (PU) synthetic leather sheet made by the following processes were laminated and compressed at 20 kg/cm$^2$ for 10 seconds.

<Treatment of PU synthetic leather sheet>

The surface of the PU synthetic leather sheet was washed with methyl ethyl ketone and dried at room temperature for 1 hour.

Then, an auxiliary primer [Primer GE6001L of Great Eastern Resins Co., Ltd. mixed with 5% by weight of a curing agent GE366S] was thinly coated thereon with a brush and dried in an oven of 60°C for 3 minutes.

Subsequently, an adhesive [Adhesive 98H of Great Eastern Resins Co., Ltd. mixed with 4% by weight of a curing agent GE348] was thinly coated thereon with a brush and dried in an oven of 60°C for 5 minutes.

<Peeling test>

The adhesive strength after 24 hours of the above-laminated sheet was evaluated in the following manner.

That is, the laminated sheet was cut to a width of 1 cm, the ends of the sheet were peeled off, and then the peeling strength was measured by pulling the ends in the 180° direction at a rate of 200 mm/min. Five samples were subjected to the test, and the adhesive strength indicated in Table 2 is an average value. Furthermore, the state of the peeled samples was observed with naked eyes.

The styrene/butadiene/styrene block copolymer used in Examples is as follows.

(1) Styrene/butadiene/styrene block copolymer (B-1)

Tufprene 125 (Asahi Kasei Corp.)
Styrene content = 40% by weight
Density (ASTM D1505, 23°C) = 0.95 g/cm$^3$
Melt flow rate ($MFR_2$) (ASTM D1238, load of 2.16 kg, 190°C) = 4.5 g/10 min

(2) Styrene/ethylene/butene/styrene block copolymer (B-2)

Tuftec H-1051 (Asahi Kasei Corp.)
Styrene content = 40% by weight
Density (ASTM D1505, 23°C) = 0.93 g/cm$^3$
Melt flow rate ($MFR_2$) (ASTM D1238, load of 2.16 kg, 190°C) = 0.8 g/10 min

The ethylene/polar monomer copolymer used in Examples is as follows.

(1) Ethylene/vinyl acetate copolymer (A2-1)

EV460 (Du Pont-Mitsui Polychemicals Co., Ltd.)
Vinyl acetate content = 19% by weight
Density (ASTM D1505, 23°C) = 0.94 g/$cm^3$
Melt flow rate ($MFR_2$) (ASTM D1238, load of 2.16 kg, 190°C) = 2.5 g/10 min

(2) Ethylene/methacrylic acid copolymer (A2-2)

N0903HC (Du Pont-Mitsui Polychemicals Co., Ltd.)
Density (ASTM D1505, 23°C) = 0.93 g/$cm^3$
Melt flow rate ($MFR_2$) (ASTM D1238, load of 2.16 kg, 190°C) = 3 g/10 min

PREPARATIVE EXAMPLE 1

[Preparation of catalytic solution]

18.4 mg of triphenylcarbenium(tetrakispentafluorophenyl)borate was weighed out, and thereto was added 5 ml of toluene to dissolve it, whereby a toluene solution having a concentration of 0.004 mM/ml was prepared. 1.8 mg of [dimethyl (t-butylamide) (tetramethyl-$\eta^5$-cyclopentadienyl)silane]titanium dichloride was weighed out, and thereto was added 5 ml of toluene to dissolve it, whereby a toluene solution having a concentration of 0.001 mM/ml was prepared. At the beginning of polymerization, 0.38 ml of the toluene solution of triphenylcarbenium(tetrakispentafluorophenyl) borate and 0.38 ml of the toluene solution of [dimethyl(t-butylamide) (tetramethyl-$\eta^5$-cyclopentadienyl)silane]titanium dichloride were weighed out, followed by adding 4.24 ml of toluene for dilution, to prepare 5 ml of a toluene solution having a triphenylcarbenium(tetrakispentafluorophenyl)borate concentration of 0.002 mM/L in terms of B and a [dimethyl (t-butylamide)(tetramethyl-$\eta^5$-cyclopentadienyl)silane]titanium dichloride concentration of 0.0005 mM/L in terms of Ti.

[Preparation of ethylene/1-butene copolymer (A1-1)]

750 ml of heptane was introduced into a 1.5-L autoclave made of SUS and equipped with a stirring blade, which has been sufficiently purged with nitrogen, at 23°C. To this autoclave, 10 g of 1-butene and 120 ml of hydrogen were introduced with rotating the stirring blade and ice-cooling. Then, the autoclave was heated up to 100°C and also pressurized with ethylene so that the total pressure became 6 kg/$cm^2$. When the internal pressure of the autoclave became 6 kg/$cm^2$, 1.0 ml of a 1.0 mM/ml solution of triisobutylaluminum (TIBA) in hexane was forced into the autoclave with nitrogen. Subsequently, 5 ml of the catalyst solution prepared as above was forced into the autoclave with nitrogen to initiate polymerization. Then, for 5 minutes, temperature control was made so that the internal temperature of the autoclave became 100°C, while ethylene was directly supplied thereto so that the pressure became 6 kg/$cm^2$. After 5 minutes from initiation of the polymerization, 5 ml of methanol was introduced into the autoclave by means of a pump to terminate the polymerization, followed by pressure release of the autoclave to atmospheric pressure. 3 Liters of methanol was poured to the reaction solution with stirring. The obtained polymer containing a solvent was dried at 130°C and 600 torr for 13 hours to obtain 10 g of the ethylene/1-butene copolymer (A1-1). The properties of the obtained ethylene/1-butene copolymer are shown in Table 1.

[Table 1]

| | PREPARATIVE EXAMPLE 1 Ethylene/1-butene copolymer A1-1 |
|---|---|
| Polymer properties | |
| Density (kg/$m^3$) | 885 |
| Melt flow rate | 1.2 |
| Mw/Mn | 2.1 |
| $MFR_{10}/MFR_2$ | 10.0 |
| B value | 1.0 |
| $T\alpha\beta/T\alpha\alpha$ | 0.3 |

REFERENCE EXAMPLE 1

A mixture comprising 80 parts by weight of an ethylene/1-butene copolymer (A1-1), 20 parts by weight of a styrene/butadiene/styrene block copolymer (SBS) (B-1), 3.0 parts by weight of zinc oxide, 0.6 part by weight of dicumyl peroxide (DCP), 0.07 part by weight (in terms of TAIC content) of triallyl isocyanurate (TAIC) [tradename: M-60 (TAIC content: 60%) available from Nippon Kasei Chemical Co., Ltd.], 0.3 part by weight of 1,2-polybutadiene and 7 parts by weight of azodicarbonamide was kneaded with a roll at a roll surface temperature of 120°C for 10 minutes and then molded into a sheet.

The obtained sheet was placed in a press mold and was pressed with heating under the conditions of 150 $kg/cm^2$ and 155°C for 30 minutes, to obtain a primary crosslinked foamed product. The size of this press mold was 15 mm in thickness, 150 mm in length and 200 mm in width.

Next, the primary crosslinked foamed product was subjected to compression molding under the conditions of 150 $kg/cm^2$ and 155°C for 10 minutes to obtain a secondary crosslinked foamed product. The size of the obtained secondary crosslinked foamed product was 15 mm in thickness, 160 mm in length and 250 mm in width.

Then, the specific gravity, compression set, tear strength, Asker C hardness and impact resilience of the secondary crosslinked foamed product were measured by the above-described methods. Further, the adhesive strength of the laminate comprising the foamed product and a polyurethane (PU) synthetic leather sheet was measured by the above-described method, while the state of peeling was observed with naked eyes at that time. The results are shown in Table 2.

REFERENCE EXAMPLE 2

A secondary crosslinked foamed product was prepared in the same manner as in Reference Example 1, except that the amount of the ethylene/1-butene copolymer (A1-1) was changed from 80 parts by weight to 90 parts by weight, and the amount of the styrene/butadiene/styrene block copolymer (SBS) (B-1) was changed from 20 parts by weight to 10 parts by weight. The properties of the secondary crosslinked foamed product were measured, and the results are shown in Table 2.

REFERENCE EXAMPLE 3

A secondary crosslinked foamed product was prepared in the same manner as in Reference Example 1, except that 20 parts by weight of the styrene/butadiene/styrene block copolymer (SBS) (B-1) was changed to 20 parts by weight of a styrene/ethylene/butene/styrene block copolymer (SEBS) (B-2), and the amount of azodicarbonamide was changed from 7 parts by weight to 6.5 parts by weight. The properties of the secondary crosslinked foamed product were measured, and the results are shown in Table 2.

REFERENCE EXAMPLE 4

A secondary crosslinked foamed product was prepared in the same manner as in Reference Example 1, except that the amount of the ethylene/1-butene copolymer (A1-1) was changed from 80 parts by weight to 60 parts by weight, 20 parts by weight of the styrene/butadiene/styrene block copolymer (SBS) (B-1) was changed to 40 parts by weight of the styrene/ethylene/butene/styrene block copolymer (SEBS) (B-2), the amount of azodicarbonamide was changed from 7 parts by weight to 6.5 parts by weight. The properties of the secondary crosslinked foamed product were measured, and the results are shown in Table 2.

EXAMPLE 1

A secondary crosslinked foamed product was prepared in the same manner as in Reference Example 1, except that 20 parts by weight of the styrene/butadiene/styrene block copolymer (SBS) (B-1) was changed to 20 parts by weight of the styrene/ethylene/butene/styrene block copolymer (SEBS) (B-2), 25 parts by weight of an ethylene/vinyl acetate copolymer (A2-1) based on 100 parts by weight of (A1-1) + (B-2) was added, and the amount of azodicarbonamide was changed from 7 parts by weight to 6.5 parts by weight. The properties of the secondary crosslinked foamed product were measured, and the results are shown in Table 2.

EXAMPLE 2

A secondary crosslinked foamed product was prepared in the same manner as in Reference Example 1, except that 20 parts by weight of the styrene/butadiene/styrene block copolymer (SBS) (B-1) was changed to 20 parts by weight

of the styrene/ethylene/butene/styrene block copolymer (SEBS) (B-2), 10 parts by weight of an ethylene/methacrylic acid copolymer (A2-2) based on 100 parts by weight of (A1-1)+(B-2) was added, and the amount of azodicarbonamide was changed from 7 parts by weight to 6.5 parts by weight. The properties of the secondary crosslinked foamed product were measured, and the results are shown in Table 2.

COMPARATIVE EXAMPLE 1

A secondary crosslinked foamed product was prepared in the same manner as in Reference Example 1, except that the amount of the ethylene/1-butene copolymer (A1-1) was changed from 80 parts by weight to 100 parts by weight, and the amount of the styrene/butadiene/styrene block copolymer (SBS) (B-1) was changed from 20 parts by weight to 0 part by weight. The properties of the secondary crosslinked foamed product were measured, and the results are shown in Table 2.

COMPARATIVE EXAMPLE 2

A crosslinked foamed product was prepared in the same manner as in Reference Example 1, except that the amount of the ethylene/1-butene copolymer (A1-1) was changed from 80 parts by weight to 0 part by weight, and the amount of the styrene/butadiene/styrene block copolymer (SBS) (B-1) was changed from 20 parts by weight to 100 parts by weight, but there occurred no foaming due to gas escape.

COMPARATIVE EXAMPLE 3

A secondary crosslinked foamed product was prepared in the same manner as in Reference Example 1, except that the amount of the ethylene/1-butene copolymer (A1-1) was changed from 80 parts by weight to 0 part by weight, 20 parts by weight of the styrene/butadiene/styrene block copolymer (SBS) (B-1) was changed to 100 parts by weight of the ethylene/vinyl acetate copolymer (A2-1), and the amount of azodicarbonamide was changed from 7 parts by weight to 6.0 parts by weight. The properties of the secondary crosslinked foamed product were measured, and the results are shown in Table 2.

[Table 2]

| Examples of EBR/St Block Copolymer | | | | | | | | | | |
|---|---|---|---|---|---|---|---|---|---|---|
| | | Ref. Ex. 1 | Ref. Ex. 2 | Ref. Ex. 3 | Ref. Ex. 4 | Ex. 1 | Ex. 2 | Comp. Ex. 1 | Comp. Ex. 2 | Comp. Ex. 3 |
| Ethylene/1-butene copolymer | A1-1 | 80 | 90 | 80 | 60 | 80 | 80 | 100 | | |
| SBS | B-1 | 20 | 10 | | | | | | 100 | |
| SEBS | B-2 | | | 20 | 40 | 20 | 20 | | | |
| EVA | A2-1 | | | | | 25 | | | | 100 |
| Ethylene/ methacrylic acid copolymer | A2-2 | | | | | | 10 | | | |

(continued)

| Properties (150% Compressed) | | | | | | | | | | |
|---|---|---|---|---|---|---|---|---|---|---|
| Specific gravity | Skin-off | 0.113 | 0.111 | 0.119 | 0.121 | 0.112 | 0.113 | 0.115 | No foaming | 0.104 |
| Compression set | % | 61 | 64 | 59 | 55 | 62 | 63 | 69 | | 72 |
| Tear strength | N/cm | 58 | 56 | 58 | 57 | 52 | 63 | 58 | | 43 |
| Hardness (23°C) | Asker C | 46 | 44 | 47 | 49 | 47 | 49 | 43 | | 45 |
| Hardness (50°C) | Asker C | 44 | 41 | 45 | 47 | 43 | 46 | 36 | | 34 |
| Δ Hardness (Hardness 23°C - Hardness 50°C) | | 2 | 3 | 2 | 2 | 4 | 3 | 7 | | 11 |
| Impact resilience | % | 64 | 64 | 63 | 63 | 61 | 60 | 66 | | 52 |
| Adhesive strength | N/cm | 2.6 | 2.4 | 2.4 | 2.5 | 2.7 | 2.7 | 2.2 | | 2.8 |
| State of peeling | | Interface was partially peeled off (*) | Interface was partially peeled off (*) | Interface was partially peeled off (*) | Material of foamed product was destroyed | Material of foamed product was destroyed | Material of foamed product was destroyed | Interface was partially peeled off (*) | | Material of foamed product was destroyed |

*} The interface of the laminate comprising a layer of the foamed product and a layer of the PU synthetic leather was peeled off.

## INDUSTRIAL APPLICABILITY

According to the present invention, a resin composition which can provide a foamed product (non-crosslinked or crosslinked foamed product) having low specific gravity and low compression set (CS), excelling in the tensile strength properties and the tear strength properties, as well as in impact resilience, and exhibiting a less decrease in hardness at high temperatures; a foamed product produced therefrom; and a laminate produced using the foamed product can be obtained.

## Claims

1. A resin composition for a foamed product, comprising 5 to 95 parts by weight of an ethylene/α-olefin copolymer (A1), 5 to 95 parts by weight of a styrene block copolymer (B), 5 to 1900 parts by weight of an ethylene/polar monomer copolymer (A2) based on 100 parts by weight of the total of components (A1) and (B), and a blowing agent (C).

2. The resin composition according to claim 1, wherein the ethylene/α-olefin copolymer (A1) has the following properties:

   the ethylene/α-olefin copolymer comprises ethylene and an α-olefin having 3 to 20 carbon atoms; the density (ASTM D1505, 23°C) is in the range of 0.857 to 0.910 g/$cm^3$; the melt flow rate at 190°C under a load of 2.16 kg ($MFR_2$) (ASTM D1238, load 2.16 kg, 190°C) is in the range of 0.1 to 40 g/10 min; and the index of molecular weight distribution, Mw/Mn, evaluated by GPC is in the range of 1.5 to 3.0.

3. The resin composition according to claim 1, wherein the ethylene/α-olefin copolymer (A1) is an ethylene/1-butene copolymer.

4. The resin composition according to claim 1, wherein the styrene block copolymer (B) is a styrene/butadiene/styrene block copolymer, a styrene/isoprene/styrene block copolymer, or a hydrogenated polymer thereof.

5. The resin composition according to claim 1, wherein the blowing agent (C) is selected from an organic thermally decomposable blowing agent, an inorganic thermally decomposable blowing agent, an organic physical blowing agent, and an inorganic physical blowing agent.

6. A foamed product which is obtainable by thermal treatment of the resin composition according to any one of claims 1 to 5.

7. A foamed product which is obtainable by secondary compression of the foamed product according to claim 6.

8. A foamed product which is obtainable from a resin composition comprising 5 to 95 parts by weight of an ethylene/α-olefin copolymer (A1), 5 to 95 parts by weight of a styrene block copolymer (B), 5 to 1900 parts by weight of an ethylene/polar monomer copolymer (A2) based on 100 parts by weight of the total of components (A1) and (B), and a blowing agent (C), wherein said foamed product has a gel content of 70% or more and a specific gravity of 0.6 or less.

9. A foamed product according to claim 8 which is a crosslinked foamed product.

10. A laminate having a layer comprising the foamed product according to any one of claims 6 to 9, and a layer comprising at least one material selected from the group consisting of polyolefins, polyurethanes, rubber, leather and artificial leather.

11. A footwear comprising the foamed product according to any one of claims 6 to 9, or the laminate according to claim 10.

12. A footwear part comprising the foamed product according to any one of claims 6 to 9, or the laminate according to claim 10.

13. The footwear part according to claim 12, which is a midsole, an innersole or a sole.

## Patentansprüche

1. Harzzusammensetzung für ein geschäumtes Produkt, umfassend 5 bis 95 Gew.-Teile eines Ethylen/α-Olefin-Copolymers (A1), 5 bis 95 Gew.-Teile eines Styrol-Block-Copolymers (B), 5 bis 1900 Gew.-Teile eines Copolymers von Ethylen und eines polaren Monomers (A2), bezogen auf 100 Gew.-Teile der Summe der Komponenten (A1) und (B), und ein Treibmittel (C).

2. Harzzusammensetzung nach Anspruch 1, wobei das Ethylen/α-Olefin-Copolymer (A1) die folgenden Eigenschaften hat:

   das Ethylen/α-Olefin-Copolymer umfasst Ethylen und ein α-Olefin, das 3 bis 20 Kohlenstoffatome hat; die Dichte (ASTM D1505, 23°C) ist im Bereich von 0,857 bis 0,910 g/cm$^3$; die Schmelzflussrate bei 190°C unter einer Belastung von 2,16 kg ($MFR_2$) (ASTM D1238, Last 2,16 kg, 190°C) ist im Bereich von 0,1 bis 40 g/10 min; und der Index der Molekulargewichtsverteilung Mw/Mn, ausgewertet durch GPC, ist im Bereich von 1,5 bis 3,0.

3. Harzzusammensetzung nach Anspruch 1, wobei das Ethylen/α-Olefin-Copolymer (A1) ein Ethylen/1-Buten-Copolymer ist.

4. Harzzusammensetzung nach Anspruch 1, wobei das Styrol-Block-Copolymer (B) ein Styrol-Butadien-Styrol-Block-Copolymer, ein Styrol-Isopren-Styrol-Block-Copolymer oder ein hydriertes Polymer davon ist.

5. Harzzusammensetzung nach Anspruch 1, wobei das Treibmittel (C) aus einem organischen thermisch zersetzbaren Treibmittel, einem anorganischen thermisch zersetzbaren Treibmittel, einem organischen physikalischen Treibmittel und einem anorganischen physikalischen Treibmittel ausgewählt ist.

6. Geschäumtes Produkt, das durch thermische Behandlung der Harzzusammensetzung nach einem der Ansprüche 1 bis 5 erhältlich ist.

7. Geschäumtes Produkt, das durch sekundäre Kompression des geschäumten Produkts nach Anspruch 6 erhältlich ist.

8. Geschäumtes Produkt, das aus einer Harzzusammensetzung erhältlich ist, umfassend 5 bis 95 Gew.-Teile eines Ethylen/α-Olefin-Copolymers (A1), 5 bis 95 Gew.-Teile eines Styrol-Block-Copolymers (B), 5 bis 1900 Gew.-Teile eines Copolymers von Ethylen und eines polaren Monomers (A2), bezogen auf 100 Gew.-Teile der Summe der Komponenten (A1) und (B), und ein Treibmittel (C), wobei das genannte geschäumte Produkt einen Gelgehalt von 70% oder mehr und eine Dichte von 0,6 oder weniger hat.

9. Geschäumtes Produkt nach Anspruch 8, wobei es ein vernetztes geschäumtes Produkt ist.

10. Laminat mit einer Schicht, umfassend das geschäumte Produkt nach einem der Ansprüche 6 bis 9, und einer Schicht, umfassend mindestens ein Material, das ausgewählt aus der Gruppe ist, bestehend aus Polyolefinen, Polyurethanen, Gummi, Leder und Kunstleder.

11. Schuhwerk, umfassend das geschäumte Produkt nach einem der Ansprüche 6 bis 9 oder das Laminat nach Anspruch 10.

12. Schuhwerkteil, umfassend das geschäumte Produkt nach einem der Ansprüche 6 bis 9 oder das Laminat nach Anspruch 10.

13. Schuhwerkteil nach Anspruch 12, der eine Zwischensohle, eine Einlage oder eine Sohle ist.

## Revendications

1. Composition de résine pour produit expansé en mousse, comprenant de 5 à 95 parties en poids d’un copolymère d’éthylène et d’α-oléfine (composant A1), de 5 à 95 parties en poids d’un copolymère de styrène à blocs (composant B), de 5 à 1900 parties en poids d’un copolymère d’éthylène et d’un monomère polaire (composant A2) pour 100 parties en poids, au total, des composants A1 et B, et un agent d’expansion (composant C).

**2.** Composition de résine conforme à la revendication 1, dans laquelle le copolymère A1 d'éthylène et d'α-oléfine possède les propriétés suivantes :

- il se compose d'éthylène et d'une α-oléfine comportant de 3 à 20 atomes de carbone ;
- sa masse volumique, mesurée à 23 °C selon la norme ASTM D-1505, vaut de 0,857 à 0,910 g/$cm^3$ ;
- son indice d'écoulement à l'état fondu $MFR_2$, mesuré à 190 °C sous une charge de 2,16 kg, selon la norme ASTM D-1238, vaut de 0,1 à 40 g/10 min ;
- et son indice de distribution des masses moléculaires Mw/Mn, évalué par chromatographie par perméation de gel, vaut de 1,5 à 3,0.

**3.** Composition de résine conforme à la revendication 1, dans laquelle le copolymère A1 d'éthylène et d'α-oléfine est un copolymère d'éthylène et de but-1-ène.

**4.** Composition de résine conforme à la revendication 1, dans laquelle le copolymère de styrène à blocs B est un copolymère à blocs styrène/butadiène/styrène ou un copolymère à blocs styrène/isoprène/styrène, ou un polymère qui est un dérivé d'hydrogénation d'un tel copolymère.

**5.** Composition de résine conforme à la revendication 1, pour laquelle l'agent d'expansion C est choisi parmi un agent organique d'expansion par décomposition thermique, un agent inorganique d'expansion par décomposition thermique, un agent organique d'expansion par voie physique, et un agent inorganique d'expansion par voie physique.

**6.** Produit expansé en mousse, qu'on peut obtenir par traitement thermique d'une composition de résine conforme à l'une des revendications 1 à 5.

**7.** Produit expansé en mousse, qu'on peut obtenir par compression secondaire d'un produit expansé en mousse conforme à la revendication 6.

**8.** Produit expansé en mousse, qu'on peut obtenir à partir d'une composition de résine comprenant de 5 à 95 parties en poids d'un copolymère d'éthylène et d'α-oléfine (composant A1), de 5 à 95 parties en poids d'un copolymère de styrène à blocs (composant B), de 5 à 1900 parties en poids d'un copolymère d'éthylène et d'un monomère polaire (composant A2) pour 100 parties en poids, au total, des composants A1 et B, et un agent d'expansion (composant C), lequel produit expansé en mousse présente une teneur en gel supérieure ou égale à 70 % et une densité inférieure ou égale à 0,6.

**9.** Produit expansé en mousse, conforme à la revendication 8, qui est un produit expansé en mousse et réticulé.

**10.** Stratifié doté d'une couche comprenant un produit expansé en mousse, conforme à l'une des revendications 6 à 9, et une couche comprenant au moins un matériau choisi dans l'ensemble constitué par les polyoléfines, polyuréthanes, caoutchoucs, cuirs et cuirs artificiels.

**11.** Chaussure comprenant un produit expansé en mousse, conforme à l'une des revendications 6 à 9, ou un stratifié conforme à la revendication 10.

**12.** Partie de chaussure comprenant un produit expansé en mousse, conforme à l'une des revendications 6 à 9, ou un stratifié conforme à la revendication 10.

**13.** Partie de chaussure, conforme à la revendication 12, qui est une semelle intercalaire, une semelle première ou une semelle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9501447 A
- JP 11206406 A
- JP 2000344924 A
- WO 9533006 A
- JP 8231817 A
- WO 0214423 A
- JP 62121709 A


### Non-patent literature cited in the description


- *Analysis Chemistry,* 1971, vol. 43, 1245
- **J.C. Randall.** *Review Macromolecular Chemistry Physics,* 1989, vol. C29, 201
- **J.C. Randall.** *Macromolecules,* 1982, vol. 15, 353
- **J. Ray.** *Macromolecules,* 1977, vol. 10, 773